(19) Europäisches Patentamt
European Patent Office
Office européen des brevets

(11) Publication number: 0 058 022
A1

(12) EUROPEAN PATENT APPLICATION

(21) Application number: 82300452.8

(22) Date of filing: 28.01.82

(51) Int. Cl.$^3$: H 01 B 7/28
H 01 B 3/22

(30) Priority: 30.01.81 GB 8102849

(43) Date of publication of application:
18.08.82 Bulletin 82/33

(84) Designated Contracting States:
AT BE CH DE FR IT LI LU NL SE

(71) Applicant: BICC Limited
21, Bloomsbury Street
London, WC1B 3QN(GB)

(72) Inventor: Hagger, John Michael Richards
17 Hollies Close Upper Grotto Road
Twickenham Middlesex(GB)

(74) Representative: Poole, Michael John et al,
BICC Limited Patents Department 38 Ariel Way Wood Lane
London W12 7DX(GB)

(54) Electric cables and compositions for use in them.

(57) A low-tack, non-cell filling filling medium for telecommunication cables comprises in parts (by weight):-

(a) 70 - 98% of a hydrocarbon base;

(b) 1 - 15% of a block copolymer which comprises at least one block tending to confer solubility in the base and at least one block tending to inhibit such solubility, the proportions of the blocks being such that the polymer shows a strong tendency to form a gel with the base; and

(c) 1 - 15% of a hydrocarbon material that is miscible with the medium at high temperatures but forms solid dispersed particles on cooling at a temperature not lower than 65°C:

the base (a) comprising:

(i) 0 - 95% of a mineral oil with or without wax, for example in the form of petroleum jelly; and

(ii) 5 - 100% of a hydrocarbon or hydrocarbon mixture whose molecules are substantially incapable of diffusing into polyethylene, polypropylene or other cellular insulating material at temperatures of up to 80°C and, when mineral oil is present being soluble in it and having a low enough (number average) molecular weight to reduce significantly the osmotic pressure of the medium.

EP 0 058 022 A1

ELECTRIC CABLES AND COMPOSITIONS FOR USE IN THEM

This invention relates to fully-filled telecommunication cables and compositions for use as a filling medium in them. These cables comprise a multiplicity of conductors each with individual insulation, grouped in any appropriate way and enclosed in a sheath, the interstices between the insulated conductors, and between them and the sheath, being filled with a waterproof filling medium. The function of the filling medium is to provide a dielectric medium, the properties of which remain at the required level even when water gains access to the interstices. Furthermore the filling medium must inhibit the passage of water along the interstices in the event that the sheath or a joint enclosure is damaged when the cable is exposed to wet conditions, for instance while buried in the ground.

The insulation on the individual conductors of such cables is almost always of polyethylene or polypropylene (including certain of their semicrystalline thermoplastic copolymers of low permittivity), and in many cases this material is used in cellular form. To be effective the filling medium must be hydrophobic and highly deformable throughout the temperature range experienced by telecommunication cables in service (which can extend from -40°C to +80°C). It must also contact the insulation in such a way as to prevent passage of water between itself and the insulation. There are very few non-volatile materials that satisfy these requirements as well as the other important requirements of low permittivity and low dielectric loss, but for cables operating at temperatures up to about 50°C hydrocarbon oils gelled with waxes (e.g.petroleum jellies) or hydrocarbon oils gelled with other suitable gelling agents have been found to be suitable.

It is however desirable to use fully-filled cables in some circumstances at temperatures up to about 80°C - for example when they are associated with and run alongside large power cables - and in this case two difficulties arise. First, petroleum jelly shows a tendency to fill cells in the insulation to an extent that may be appreciable in a few months. This can result in partial loss of the medium from interstitial spaces in the cable leading to the development of longitudinal channels and the consequent impairment of the waterproofness of the cable; in addition, the displacement of air (permittivity approximately 1.0) in the cellular insulation by the filling medium (permittivity typically 2.3) will lead to changes in cable capacitance and hence transmission characteristics of the cable. Second, the viscosity of the medium decreases to the point at which it may flow along the interstices under the hydrostatic pressures that may occur in an installed cable, allowing the water to flow after it.

In our European Patent Application 78300524.2, Publication Number 0001713, we have described a filling medium, and cables incorporating it, in which both of these problems have been overcome. The filling media there described, however, in common with conventional petroleum jelly based filling compounds, adhere tenaciously to insulation and require repeated mechanical wiping away from the insulation to prepare individual insulated wires for jointing and terminating purposes. The present invention defines a filling medium which is less tacky and more easily removed from the insulation and is generally more convenient to handle.

Other filling media that satisfy this desire are known, but these are particularly unsatisfactory in their cell filling characteristics, even at relatively low temperatures and it is the object of the present invention to provide a filling medium (and cables incorporating it) that satisfies the requirement of effectively inhibiting cell filling in conjunction with that of the improved handling characteristics and which can be formulated for use at temperatures up to about 80°C if required.

The filling medium in accordance with the invention comprises (by weight):

(a) 70 - 98% of a hydrocarbon base;

(b) 1 - 15% of a block copolymer which comprises at least one block tending to confer solubility in the base and at least one block tending to inhibit such solubility, the proportions of the blocks being such that the polymer shows a strong tendency to form a gel with the base; and

(c) 1 - 15% of a hydrocarbon material that is miscible with the medium at high temperatures but forms solid dispersed particles on cooling at a temperature not lower than 65°C:

the base (a) comprising:

(i) 0 - 95% of a mineral oil with or without wax, for example in the form of petroleum jelly; and

(ii) 5 - 100% of a hydrocarbon or hydrocarbon mixture whose molecules are substantially incapable of diffusing into polyethylene, polypropylene or other cellular insulating material at temperatures of up to 80°C and, when mineral oil is present being soluble in it and having a low enough (number average) molecular weight to reduce significantly the osmotic pressure of the medium.

In addition to the ingredients specified, the medium may include effective amounts of antioxidants and other stabilisers, including gel stabilisers.

The mineral oil preferably has an aromatic content less than 15% or better not greater than 5%, ideally not greater than 2%. Typical materials meeting these requirements are White Technical Oils for example Puremor WOT45 sold by Burmah-Castrol Industrial Limited. Oils of high aromatic content can significantly alter the solubility characteristics of certain block copolymers and can also degrade dielectric properties of the filling medium in some cases.

One preferred group of osmotic-pressure reducing substances for use as ingredient (ii) of the base consists of liquid polybutenes, made essentially from iso-butene, with number average molecular weights between 200 and 4000, particularly those between 350 and 2500, and more particularly between 400 and 1500. Such materials are sold by BP Chemicals Limited, under the trade name Hyvis. As the molecular weight of the polybutene increases, the solubility and gel forming ability of the block copolymer is impaired and the resulting composition tends to become more tacky.

Another preferred group of osmotic-pressure reducing substances for this purpose consists of low molecular weight hydrocarbon resins, particularly those, said to be derived largely from alpha-methylstryrene, sold by Hercules Powder Company under the trade name Kristalex and having ring-and-ball softening points (ASTM-E28) between 20° and 120°C and more particularly between 60° and 100°C.

The block copolymer (b) preferably forms 2 - 8% of the medium, and may be of various types, such as those designated "ABA", "ABAB", "ABCBA", "$A_nB$" and $(AB)_n$.

At least when the oil has an aromatic content less than 15%, a preferred material for use as ingredient (b) is a block copolymer of the ABA type in which the centre block (B) is a random copolymer of ethylene and butylene with end blocks (A) formed by graft polymerisation of styrene on to the centre block, for example a commercial material with a styrene to ethylene-butylene ratio of approximately 0.4, sold by Shell Chemicals Limited under the trade mark Kraton as Kraton G1650 or G1652.

The high temperatures at which ingredient (c) is miscible with the medium must include a temperature at which the medium can be introduced into the cable. The maximum level of this temperature will almost always be determined by the softening characteristics of the insulation of the cable in which the medium is to be used. For example, for the following commonly-used cellular insulating materials, the ingredient (c) must be miscible with the medium down to the temperature indicated (at least):

medium density polyethylene - 95 (preferably 90)°C
high density polyethylene - 105 (preferably 100)°C
polypropylene - 135 (preferably 130)°C

For maximum versatility of use, it is preferable that this ingredient does not form solid dispersed particles until the temperature falls to at least 90°C, and preferably to 85°C.

Preferably there is at least 1.5%, and more especially 1.5 - 5%, of ingredient (c). This ingredient is preferably a low molecular-weight polyethylene with a ring-and-ball softening point (ASTM-E28) in the range 110 - 130°C. Suitable ethylene homopolymers are sold by Allied Chemical, for example grade AC 8 which has a ring-and-ball softening point (ASTM-E28) of 116°C and a viscosity (Brookfield-LVT at 140°C) of 350 cP.

A preferred gel stabiliser is the "synthetic iso-propylated phenyl orthophosphate" sold by Ciba-Geigy Limited under the trade mark "Reofos" as Reofos 95. Alternatives can be selected from among other phosphate esters, alkyl ether phosphates, di(alkyl ether) esters, di-and poly-(alkylene oxy) glycol diesters, alkyl-alkyl ether diesters, alkyl ether monoesters and aromatic diesters.

Conventional antioxidants can be used in appropriate amounts, a suitable example being 0.5 - 1% of the material sold by Vulnax International Limited under the trade mark Permanax as Permanax WSP.

Other stabiliser additives, such as metal

deactivators, flame retardants, can be added as appropriate.

The following tables show the compositions of various examples of filling media in accordance with the invention (Examples 1 - 28) together with some other media (Examples A - D) for comparison purposes. Properties are reported for selected examples. More specifically Examples 1 - 18 (Tables 1-3) illustrate the use of various commercially available ingredients to control cell-filling tendency; Examples 19 - 23 (and Example 6 repeated for ease of comparison) (Table 4) illustrate how the content of ingredients (b) and (c) may be varied to control viscosity (cell-filling tendency in all these examples being at an insignificant level); Examples 6 (repeated again) and 24 - 26 (Table 5) illustrate how tackiness can be controlled by varying the ratio of the ingredients (c) and (b); and Examples 27 - 28 (Table 6) are formulated to have a specially low viscosity to suit particular existing applicator plant.

Examples A - D are also included in Table 6; the exact compositions of Examples B, C and D are not known; they are commercially available materials as follows:-

Example B: Penreco FW - Non-petrolatum based cable filling compound sold by Penreco Inc., of Butler, Pennsylvania, U.S.A.

Example C: Silkolene 947 - Petroleum jelly compound sold by Dalton & Company Limited, of Belper, Derbyshire, U.K.

Example D: Insojell 3332 - High temperature petroleum jelly compound sold by Dussek Campell Limited, of Crayford, Kent, U.K.

TABLE 1

| Example: | 1 | 2 | 3 | 4 | 5 | 6 |
|---|---|---|---|---|---|---|
| COMPOSITION | | | | | | |
| White Technical Oil (Puremore WOT 45) | 80 | 70 | 60 | 85 | 80 | 70 |
| Polybutene | | | | | | |
| Hyvis 200 (number average molecular weight 2400) | 10 | 20 | 30 | | | |
| Hyvis 10 (number average molecular weight 1000) | | | | 5 | 10 | 20 |
| Hyvis 3 (number average molecular weight 650) | | | | | | |
| Hyvis 07 (number average molecular weight 440) | | | | | | |
| Hyvis 03 (number average molecular weight 250) | | | | | | |
| Hydrocarbon Resin: | | | | | | |
| Kristalex F 85 | | | | | | |
| Kristalex 3025 | | | | | | |
| Block Copolymer: (Kraton G1652) | 6 | 6 | 6 | 6 | 6 | 6 |
| Polyethylene (AC8) | 4 | 4 | 4 | 4 | 4 | 4 |
| PROPERTIES | | | | | | |
| Cell filling (at 70°C): | | | | | | |
| % mass increase ( 5 weeks | | 8.4 | | 14.1 | 11.6 | 10.2 |
| % mass increase (10 weeks | | 8.8 | | 15.6 | 12.0 | 10.3 |
| % increase in density ( 5 weeks | | 0.0 | | 4.5 | 2.4 | 0.6 |
| % increase in density (10 weeks | | 0.1 | | 5.0 | 2.7 | 0 |
| % air replacement ( 5 weeks | | 0 | | 9.4 | 3.6 | 0 |
| % air replacement (10 weeks | | 0 | | 10.5 | 4.4 | 0 |
| Drop Point (°C) (IP31/66) | 77 | 85 | 88 | 73 | 74 | 76 |
| Drainage Test at 70°C (passes in 3) | | 3 | | | | 3 |
| Viscosity (P) at 90°C (11.8$s^{-1}$ | | 27.5 | | | 11.0 | 17.7 |
| Viscosity (P) at 90°C (125.4$s^{-1}$ | | 16.5 | | | 8.3 | 9.7 |
| Finger test | B | D | E | B | B | B |

TABLE 2

| Example: | 7 | 8 | 9 | 10 | 11 | 12 |
|---|---|---|---|---|---|---|
| COMPOSITION | | | | | | |
| White Technical Oil (Puremore WOT 45) | 50 | 70 | 70 | 70 | 50 | 30 |
| Polybutene | | | | | | |
| Hyvis 200 (number average molecular weight 2400) | | | | | | |
| Hyvis 10 (number average molecular weight 1000) | 40 | | | | | |
| Hyvis 3 (number average molecular weight 650) | | 20 | | | | |
| Hyvis 07 (number average molecular weight 440) | | | 20 | | | |
| Hyvis 03 (number average molecular weight 250) | | | | 20 | 40 | 60 |
| Hydrocarbon Resin: | | | | | | |
| Kristalex F 85 | | | | | | |
| Kristalex 3025 | | | | | | |
| Block Copolymer: (Kraton G1652) | 6 | 6 | 6 | 6 | 6 | 6 |
| Polyethylene (AC8) | 4 | 4 | 4 | 4 | 4 | 4 |
| PROPERTIES | | | | | | |
| Cell filling (at 70°C): | | | | | | |
| % mass increase ( 5 weeks | | 12.2 | 17.4 | 30.7 | | 16.6 |
| (10 weeks | | 13.1 | 21.7 | 39.3 | | |
| % increase in density ( 5 weeks | | 2.4 | 6.9 | 18.7 | | 4.8 |
| (10 weeks | | 2.8 | 9.5 | 24.4 | | |
| % air replacement ( 5 weeks | | 3.3 | 15.9 | 44.1 | | 10.0 |
| (10 weeks | | 4.4 | 22.0 | 63.7 | | |
| Drop Point (°C) (IP31/66) | 85 | 73 | 70 | 64 | 55 | 52 |
| Drainage Test at 70°C (passes in 3) | | | | 2 | | |
| Viscosity (P) at 90°C ($11.8s^{-1}$ | | | | 3.5 | | |
| ($125.4s^{-1}$ | | | | 1.6 | | |
| Finger test | C | B | B | A | B | B |

TABLE 3

| Example: | 13 | 14 | 15 | 16 | 17 | 18 |
|---|---|---|---|---|---|---|
| COMPOSITION | | | | | | |
| White Technical Oil (Puremore WOT 45) | | 80 | 70 | 70 | 70 | 60 |
| Polybutene | | | | | | |
| Hyvis 200 (number average molecular weight 2400) | | | | | | |
| Hyvis 10 (number average molecular weight 1000) | | | | | 10 | 10 |
| Hyvis 3 (number average molecular weight 650) | | | | | | |
| Hyvis 07 (number average molecular weight 440) | | | | | | |
| Hyvis 03 (number average molecular weight 250) | 90 | | | | | |
| Hydrocarbon Resin: | | | | | | |
| Kristalex F 85 | | 10 | 20 | | 10 | 20 |
| Kristalex 3025 | | | | 20 | | |
| Block Copolymer: (Kraton G1652) | 6 | 6 | 6 | 6 | 6 | 6 |
| Polyethylene (AC8) | 4 | 4 | 4 | 4 | 4 | 4 |
| PROPERTIES | | | | | | |
| Cell filling (at 70 °C): | | | | | | |
| % mass increase ( 5 weeks | 24.5 | 18.9 | 11.5 | 14.9 | 10.7 | 11.1 |
| (10 weeks | 32.2 | | 12.4 | 17.8 | 12.9 | 10.2 |
| % increase in density ( 5 weeks | 9.3 | 7.3 | 2.1 | 4.7 | 0 | 1.2 |
| (10 weeks | 14.4 | | 2.8 | 7.8 | 1.9 | 0.3 |
| % air replacement ( 5 weeks | 20.4 | 16.4 | 3.1 | 9.8 | 0 | 0.9 |
| (10 weeks | 42.2 | | 4.6 | 9.3 | 2.2 | 0 |
| Drop Point (°C) (IP31/66) | 36 | 67 | 66 | 58 | 70 | 71 |
| Drainage Test at 70 °C (passes in 3) | | 3 | 3 | | | |
| Viscosity (P) at 90 °C (11.8s$^{-1}$ | | | 5.0 | | 8.3 | 8.5 |
| (125.4s$^{-1}$ | | | 3.3 | | 7.8 | 7.8 |
| Finger test | A | A | B | A | B | B |

TABLE 4

| Example: | 19 | 20 | 6 | 21 | 22 | 23 |
|---|---|---|---|---|---|---|
| COMPOSITION | | | | | | |
| White Technical Oil (Puremore WOT 45) | 70 | 70 | 70 | 70 | 70 | 70 |
| Polybutene | | | | | | |
| Hyvis 200 (number average molecular weight 2400) | | | | | | |
| Hyvis 10 (number average molecular weight 1000) | 20 | 20 | 20 | 20 | 20 | 20 |
| Hyvis 3 (number average molecular weight 650) | | | | | | |
| Hyvis 07 (number average molecular weight 440) | | | | | | |
| Hyvis 03 (number average molecular weight 250) | | | | | | |
| Hydrocarbon Resin: | | | | | | |
| Kristalex F 85 | | | | | | |
| Kristalex 3025 | | | | | | |
| Block Copolymer: (Kraton G1652) | 10 | 8 | 6 | 4 | 2 | - |
| Polyethylene (AC8) | - | 2 | 4 | 6 | 8 | 10 |
| PROPERTIES | | | | | | |
| Cell filling (at 70°C): | | | | | | |
| % mass increase ( 5 weeks | | | | | | |
| (10 weeks | | | | | | |
| % increase in density ( 5 weeks | | | | | | |
| (10 weeks | | | | | | |
| % air replacement ( 5 weeks | | | | | | |
| (10 weeks | | | | | | |
| Drop Point (°C) (IP31/66) | 82 | 79 | 76 | 76 | 74 | 79 |
| Drainage Test at 70°C (passes in 3) | 0 | 3 | 3 | 3 | 3 | 3 |
| Viscosity (P) at 90°C ($11.8 s^{-1}$ | >50 | 48 | 17.7 | 6.5 | 4.3 | 2.2 |
| ($125.4 s^{-1}$ | 40 | 27 | 9.7 | 4.5 | 2.2 | 1.1 |
| Finger test | A | B | B | D | E | E |

TABLE 5

| Example: | 6 | 24 | 25 | 26 |
|---|---|---|---|---|
| COMPOSITION | | | | |
| White Technical Oil (Puremore WOT 45) | 70 | 72.5 | 75 | 77.5 |
| Polybutene | | | | |
| Hyvis 200 (number average molecular weight 2400) | | | | |
| Hyvis 10 (number average molecular weight 1000) | 20 | 20 | 20 | 20 |
| Hyvis 3 (number average molecular weight 650) | | | | |
| Hyvis 07 (number average molecular weight 440) | | | | |
| Hyvis 03 (number average molecular weight 250) | | | | |
| Hydrocarbon Resin: | | | | |
| Kristalex F 85 | | | | |
| Kristalex 3025 | | | | |
| Block Copolymer: (Kraton G1652) | 6 | 4.5 | 3 | 1.5 |
| Polyethylene (AC8) | 4 | 3 | 2 | 1 |
| PROPERTIES | | | | |
| Cell filling (at 70°C): | | | | |
| % mass increase ( 5 weeks | | | | |
| (10 weeks | | | | |
| % increase in density ( 5 weeks | | | | |
| (10 weeks | | | | |
| % air replacement ( 5 weeks | | | | |
| (10 weeks | | | | |
| Drop Point (°C) (IP31/66) | 76 | 70 | 62 | 53 |
| Drainage Test at 70°C (passes in 3) | 3 | 3 | 0 | 0 |
| Viscosity (P) at 90°C ($11.8 s^{-1}$ | 17.7 | 3.5 | 0.8 | <0.5 |
| ($125.4 s^{-1}$ | 9.7 | 3.3 | 0.8 | <0.5 |
| Finger test | B | C | E | E |

TABLE 6

| Example: | 27 | 28 | A | B | C | D |
|---|---|---|---|---|---|---|
| **COMPOSITION** | | | | | | |
| White Technical Oil (Puremore WOT 45) | 72.5 | 70.5 | 90 | | | |
| Polybutene | | | | | - SEE - TEXT - | |
| Hyvis 200 (number average molecular weight 2400) | | | | | | |
| Hyvis 10 (number average molecular weight 1000) | 10 | 10 | | | | |
| Hyvis 3 (number average molecular weight 650) | | | | | | |
| Hyvis 07 (number average molecular weight 440) | | | | | | |
| Hyvis 03 (number average molecular weight 250) | | | | | | |
| Hydrocarbon Resin: | | | | | | |
| Kristalex F 85 | 10 | 13 | | | | |
| Kristalex 3025 | | | | | | |
| Block Copolymer: Kraton G1652) | 4.5 | 4.5 | 6 | | | |
| Polyethylene (AC8) | 3 | 2 | 4 | | | |
| **PROPERTIES** | | | | | | |
| Cell filling (at 70°C): | | | | | | |
| % mass increase ( 5 weeks | | 10.6 | 28.4 | 31.4 | 28.5 | 24.1 |
| (10 weeks | | - | 32.5 | 36.3 | 48.6 | 29.1Ξ |
| % increase in density ( 5 weeks | | 1.4 | 16.3 | 21.5 | 6.5 | 2.9 |
| (10 weeks | | - | 19.8 | 22.2 | 14.7 | 7.1Ξ |
| % air replacement ( 5 weeks | | 1.6 | 37.4 | 47.7 | 14.0 | 5.3 |
| (10 weeks | | - | 48.4 | 55.8 | 47.5 | 15.2Ξ |
| Drop Point (°C) (IP31/66) | 70 | 71 | 71 | 60 | 75 | 85 |
| Drainage Test at 70°C (passes in 3) | 3 | 0* | 3 | 3 | 0 | 3 |
| Viscosity (P) at 90°C ($11.8 s^{-1}$ | 2.0 | 1.1 | 6.4 | 1.3 | <1 | 2.3 |
| ($125.4 s^{-1}$ | 1.6 | 0.9 | 5.2 | 0.9 | <1 | 1.0 |
| Finger test | C | B | B | C | E | E |

* but rates 3 at 65°C

Ξ 20 weeks

Properties reported in the table were tested as follows:

1. Cell Filling

Based on weighing in air and water samples of insulated conductor, as described by S. M. Beach, K. R. Bullock and D. F. Cretney, 'Cellular Polyethylene Insulated Filled Communication Cable and its Increasing Use', 24th Wire & Cable Symposium, 1975. The samples used in these tests were of copper wire, 0.5 mm in diameter, covered with 0.2 mm radial thickness of an expanded medium-density polyethylene; the polyethylene was supplied by BXL Plastics Limited under the reference BXL PN 225/6 and the degree of expansion was 30%. Note that, because of thermal annealing effects, density increases below 1% do not imply any cell filling.

2. Drop Point

By Institute of Petroleum test IP31/66.

3. Drainage

Three samples of polyethylene tube, each 150 mm long, 3 mm bore and 1.5 mm wall thickness, were filled with the medium to be tested, using a syringe and if necessary softening the medium by heating. The tube ends were both open throughout the test. Filled tubes were suspended vertically in an air oven at 70°C for 24 hours. No visible drainage is allowable.

4. Viscosity

Measured with the Ferranti Portable Viscometer, Model VM, at the shear rates of 11.8 and 125.4 $s^{-1}$ as indicated.

5. Finger Test

A subjective test of handling properties based on squeezing a ball of the medium between thumb and finger and rating on the scale:

A - cohesive enough to stick to only one of thumb and finger and leaving no appreciable oil residue on the other.

B - cohesive but very slight oil residue left

C - cohesive but slight oil residue left

D - leaves substantial oil residue and/or is not cohesive enough to avoid risk of leaving some residue of medium

E - cohesion so low that medium sticks to both thumb and finger

CLAIMS

1. A filling medium for fully-filled telecommunication cables comprising (by weight):-

(a) 70 - 98% of a hydrocarbon base;

(b) 1 - 15% of a block copolymer which comprises at least one block tending to confer solubility in the base and at least one block tending to inhibit such solubility, the proportions of the blocks being such that the polymer shows a strong tendency to form a gel with the base; and

(c) 1 - 15% of a hydrocarbon material that is miscible with the medium at high temperatures but forms solid dispersed particles on cooling at a temperature not lower than 65°C:

the base (a) comprising:

(i) 0 - 95% of a mineral oil with or without wax, for example in the form of petroleum jelly; and

(ii) 5 - 100% of a hydrocarbon or hydrocarbon mixture whose molecules are substantially incapable of diffusing into polyethylene, polypropylene or other cellular insulating material at temperatures of up to 80°C and, when mineral oil is present being soluble in it and having a low enough (number average) molecular weight to reduce significantly the osmotic pressure of the medium.

2. A medium as claimed in Claim 1 in which the ingredient (ii) of the base comprises a liquid polybutene with a number average molecular weight between 200 and 4000.

3. A medium as claimed in Claim 1 in which the ingredient (ii) comprises a low molecular weight hydrocarbon resin.

4. A medium as claimed in any one of the preceding claims in which the oil has an aromatic content less than 15%.

5. A medium as claimed in any one of the preceding claims in which ingredient (b) is a block copolymer of the ABA type in which the centre block (B) is a random copolymer of ethylene and butylene with end blocks (A) formed by graft polymerisation of styrene on to the centre block.

6. A medium as claimed in any one of the preceding claims in which there is 1.5 to 5% of ingredient (c).

7. A fully-filled telecommunication cable distinguished by a filling medium comprising (by weight):-

(a) 70 - 98% of a hydrocarbon base;

(b) 1 - 15% of a block copolymer which comprises at least one block tending to confer solubility in the base and at least one block tending to inhibit such solubility, the proportions of the blocks being such that the polymer shows a strong tendency to form a gel with the base; and

(c) 1 - 15% of a hydrocarbon material that is miscible with the medium at high temperatures but forms solid dispersed particles on cooling at a temperature not lower than 65 °C:

the base (a) comprising:

(i) 0 - 95% of a mineral oil with or without wax, for example in the form of petroleum jelly; and

(ii) 5 - 100% of a hydrocarbon or hydrocarbon mixture whose molecules are substantially incapable of diffusing into polyethylene, polypropylene or other cellular insulating material at temperatures of up to 80°C and, when mineral oil is present being soluble in it and having a low enough (number average) molecular weight to reduce significantly the osmotic pressure of the medium.

8. A cable as claimed in Claim 7 in which the filling medium has a composition claimed in any one of Claims 2 to 6.

0058022

European Patent Office

# EUROPEAN SEARCH REPORT

Application number
EP 82300452.8

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | GB - A - 2 021 612 (WESTERN ELECTRIC) | | H 01 B 7/28<br>H 01 B 3/22 |
| X | * Page 1, lines 34-62; pages 2,4; examples 17,18 * | 1,4-8 | |
| Y | * Page 1, lines 34-62; pages 2,4; examples 17,18 * | 2,3 | |
| | -- | | |
| Y,D | EP - A1 - 0 001 713 (BICC)<br>* Claims 1,4,6,9 * | 2 | |
| | -- | | |
| Y | DE - A1 - 2 657 280 (GUTE-HOFFNUNGSHUTTE)<br>* Page 4, line 24 - page 5, line 27; page 7, lines 1-30 * | 3 | |
| | ---- | | |

TECHNICAL FIELDS SEARCHED (Int.Cl. 3)

H 01 B 7/00
H 01 B 13/00
H 01 B 3/00
H 01 B 11/00
C 10 M 1/00

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| VIENNA | 19-04-1982 | KUTZELNIGG |

EPO Form 1503.1 06.78